# EUROPÄISCHE PATENTSCHRIFT

(11) **EP 2 515 193 B1**
(45) Veröffentlichungstag und Bekanntmachung des Hinweises auf die Patenterteilung: **02.04.2014**
(21) Anmeldenummer: 11162780.8
(22) Anmeldetag: 18.04.2011
(51) Int. Cl.: G05B 19/4061, G05B 15/02

(54) **Verfahren zur Vermeidung einer ungewollten Kollision zwischen einem Werkzeug und einem Werkstück bei einer Werkzeugmaschine**
Method for avoiding an unwanted collision between a tool and a workpiece with a machine tool
Procédé destiné à éviter une collision non désirée entre un outil et une pièce usinée dans une machine-outil

(43) Veröffentlichungstag der Anmeldung: 24.10.2012
(73) Patentinhaber: Siemens Aktiengesellschaft, 80333 München (DE)
(72) Erfinder: Tolkmitt, Tom, 90768 Fürth (DE)

(56) Entgegenhaltungen:
- EP-A2- 2 031 471
- DE-A1- 10 114 811

## Beschreibung

Die Erfindung betrifft ein Verfahren zur Vermeidung einer ungewollten Kollision zwischen einem Werkzeug und einem Werkstück bei einer Werkzeugmaschine. Weiterhin betrifft die Erfindung eine Einrichtung zur Steuerung einer Werkzeugmaschine.

Bei der Bearbeitung von Werkstücken mittels Werkzeugmaschinen müssen ungewollte Kollisionen zwischen dem Werkzeug und dem Werkstück, die zu einer Zerstörung des Werkzeugs und/oder des Werkstücks führen können, vermieden werden. Dabei kommt es, wenn die Abarbeitung eines Teileprogramm, das die Bewegungen der Werkzeugmaschine steuert, insbesondere mitten im Programm unterbrochen wird und das Werkzeug im Handbetrieb vom Werkstück wegbewegt wird und anschließend an die ursprüngliche Position im Handbetrieb zur Fortsetzung des Programms wieder hinbewegt wird, häufig zu ungewollten Kollisionen zwischen dem Werkzeug und dem Werkstück, da zur Realisierung der vom Bediener per Hand vorgegebenen Bewegung die Maschinenachsen im sogenannten Interpolationsverbund arbeiten und so mehrere Maschinenachsen zur Bewegung des Werkstücks und/oder des Werkzeugs gleichzeitig bewegt werden, so dass der Bediener oftmals schwer einschätzen kann, wie eine per Hand eingegebene Bewegungsvorgabe von der Werkzeugmaschine umgesetzt wird. Eine oft über mehrere Stunden oder gar Tage andauernde Bearbeitung auf der Werkzeugmaschine war dann umsonst, da das Werkstück nach der Kollision nicht mehr brauchbar ist.

Aus der Veröffentlichung "Gegen den Kollisionskurs", "Antriebspraxis 02/2007, ist ein Kollisionsvermeidungssystem bekannt, bei dem mittels einer Simulation während der Bearbeitung des Werkstücks ein Werkstückmodell berechnet wird und anhand diesem eine Kollisionsvermeidung realisiert wird. Die Berechnung eines Werkstückmodell benötigt aber sehr viel Rechenzeit, so dass zum einen eine hohe Rechenleistung zur Durchführung eines solchen Kollisionsvermeidungssystems benötigt wird und zum anderen bevor mit der realen Bearbeitung des Werkstücks begonnen werden kann, die Simulation mit einem zeitlichen Vorsprung vor dem Beginn der realen Werkstückbearbeitung ablaufen werden muss, da die Ermittelung des Werkstückmodells in der Regel trotz der hohen Rechenleistung nicht zeitgleich zur realen Bearbeitung des Werkstücks ablauffähig ist. In der Praxis führt dies dazu, dass wenn der Bediener den Startknopf zur Bearbeitung drückt, sich erst einmal an der Werkzeugmaschine nichts tut, da die Werkzeugmaschine zunächst über einen gewissen Zeitraum die bei der Bearbeitung des Werkstücks durch das Werkzeug entstehende aktuelle geometrische Werkstückform, d.h. das Werkstückmodell im Voraus berechnen muss. Hierdurch erhöht sich die Bearbeitungszeit für das Werkstück. Weiterhin werden insbesondere bei einer Bedienung per Hand relativ große Sicherheitsabstände zwischen Werkstück und Werkzeug benötigt.

**Aus der** EP 2 031 471 A2 **sind ein Verfahren sowie eine Steuerung zur Vermeidung einer ungewollten Kollision zwischen einem Werkzeug und einem Werkstück bei einer Werkzeugmaschine bekannt, bei denen eine numerische Steuerung für mehrere strukturelle Maschinenobjekte Kollisionsbereiche ermittelt, wobei die Kollisionsbereiche in Abhängigkeit von Maschinenkoordinaten bewegt werden und wobei zur Kollisionserkennung geprüft wird, ob die Kollisionsbereiche kollidieren. Die Kollisionsbereiche werden in Abhängigkeit der Verfahrgeschwindigkeit einzelner Achsen der Werkzeugmaschine sowie der für die Kollisionserkennung benötigten Rechenzeit in ihrer Größe angepasst.**

**Aus der** DE 101 14 811 A1 **sind ein System sowie ein Verfahren zur Erstellung von mehrachsigen Bearbeitungsvorgängen an Werkstücken auf mindestens einer Werkzeugmaschine mittels mindestens eines Werkzeugs bekannt, wobei Soll-Bearbeitungs-Bahnen bezüglich der Sollgeometrie des betreffenden Werkstücks in einem Datenmodul gespeichert sind, wobei zu jedem Zeitpunkt der Bearbeitung des Werkstücks eine Feststellung der tatsächlichen Bahndaten oder der Abweichung von den ursprünglichen Soll-Bearbeitungs-Bahnen unter Berücksichtigung des durch die Bearbeitung des Werkstücks erfolgten Materialabtrags erfolgt.**

Es ist Aufgabe der Erfindung, ein Verfahren zur Vermeidung einer ungewollten Kollision zwischen einem Werkzeug und einem Werkstück bei einer Werkzeugmaschine zu schaffen.

Diese Aufgabe wird gelöst durch ein Verfahren zur Vermeidung einer ungewollten Kollision zwischen einem Werkzeug und einem Werkstück bei einer Werkzeugmaschine, wobei bei Start einer Abarbeitung eines Teileprogramms die Ermittlung von Bewegungssollwerten zur Steuerung einer Relativbewegung zwischen Werkzeug und Werkstück anhand des Teileprogramms und eine Ermittlung des Materialabtrags am Werkstück durch das Werkzeug anhand der ermittelten Bewegungssollwerte gestartet wird, wobei wenn nach einer Beendigung oder Unterbrechung der Abarbeitung des Teileprogramms die Relativbewegung zum Stillstand gekommen ist, anhand des ermittelten Materialabtrags ein Werkstückmodell ermittelt wird, wobei anhand einer Handbedieneingabe die Bewegungssollwerte ermittelt werden, wobei anhand der Bewegungssollwerte zu erwartende zukünftige Bewegungssollwerte ermittelt werden, wobei anhand der zu erwartenden zukünftigen Bewegungssollwerte eine Bremsendanordnung des Werkzeugs ermittelt wird, wobei anhand der Bremsendanordnung des Werkzeugs und eines die geometrische Form des Werkzeugs beschreibenden Werkzeugformmodells ein Werkzeugmodell ermittelt wird, wobei überprüft wird, ob das Werkzeugmodell sich mit dem Werkstückmodell überschneidet, wobei im Falle einer festgestellten Überschneidung ein Abbremsen der Relativbewegung zwischen Werkzeug und Werkstück bis zum Stillstand der Relativbewegung bewirkt wird.

Weiterhin wird diese Aufgabe gelöst durch eine Einrichtung zur Steuerung einer Werkzeugmaschine, wobei die Einrichtung aufweist:
- eine Steuereinheit, die zur Ermittlung von Bewegungssollwerten zur Steuerung einer Relativbewegung zwischen Werkzeug und Werkstück anhand eines Teileprogramms und zum Starten der Ermittlung eines Materialabtrags am Werkstück durch das Werkzeug anhand der ermittelten Bewegungssollwerte bei Start der Abarbeitung des Teileprogramms ausgebildet ist, wobei die Steuereinheit weiterhin zur Ermittlung von Bewegungssollwerten zur Steuerung einer Relativbewegung zwischen Werkzeug und Werkstück anhand einer Handbedieneingabe ausgebildet ist,
- eine Materialabtragsermittlungseinheit, die zur Ermittlung des Materialabtrags am Werkstück durch das Werkzeug anhand der ermittelten Bewegungssollwerte ausgebildet ist,
- eine Werkstückmodellermittlungseinheit, die zur Ermittlung eines Werkstückmodells anhand des ermittelten Materialabtrags, wenn nach einer Beendigung oder Unterbrechung der Abarbeitung des Teileprogramms die Relativbewegung zum Stillstand gekommen ist, ausgebildet ist,
- eine Bremsendanordnungsermittlungseinheit, die zur Ermittlung von zu erwartenden zukünftigen Bewegungssollwerten anhand der Bewegungssollwerte ausgebildet ist, wobei die Bremsendanordnungsermittlungseinheit ausgebildet ist, anhand der zu erwartenden zukünftigen Bewegungssollwerte eine Bremsendanordnung des Werkzeugs zu ermitteln,
- eine Werkzeugmodellermittlungseinheit, die zur Ermittlung eines Werkzeugmodells anhand der Bremsendanordnung und einem die geometrische Form des Werkzeugs beschreibenden Werkzeugformmodells ausgebildet ist und
- eine Überprüfungseinheit, die zur Überprüfung, ob das Werkzeugmodell sich mit dem Werkstückmodell überschneidet, ausgebildet ist, wobei die Überprüfungseinheit ausgebildet ist, im Falle einer festgestellten Überschneidung eine Abbremsung der Relativbewegung zwischen Werkzeug und Werkstück bis zum Stillstand der Relativbewegung zu bewirken.

Die Erfindung benötigt keine Sicherheitsabstände zwischen Werkzeug und Werkstück, so dass das erfindungsgemäße Verfahren auch bei sehr filigranen, und insbesondere kleinen Werkstücken durchgeführt werden kann.

Die Einrichtung zur Steuerung einer Werkzeugmaschine kann dabei z.B. in Form einer CNC-Steuerung vorliegen, wobei die CNC-Steuerung z.B. in Form einer einzelnen oder mehrerer Recheneinheiten vorliegen kann, auf der ein oder mehrere Computerprogramme mit Programmcode zur Durchführung des erfindungsgemäßen Verfahrens ausgeführt werden. Die Recheneinheit oder Recheneinheiten können dabei jeweils ein oder mehrere Prozessoren aufweisen, auf denen das oder die Computerprogramme ablaufen.

Ein Ausführungsbeispiel der Erfindung ist in der Zeichnung dargestellt und wird im Folgenden näher erläutert. Darin zeigen:
- FIG 1: eine Werkzeugmaschine,
- FIG 2: eine erfindungsgemäße Einrichtung zur Steuerung ei-ner Werkzeugmaschine und
- FIG 3: eine Bewegungsbahn S, entlang der ein Fräser zur Bearbeitung eines Werkstücks bewegt wird.

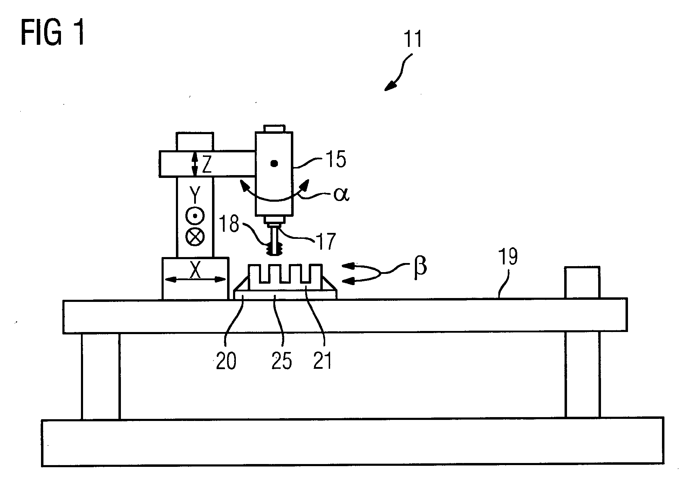

In FIG 1 ist schematisiert eine Werkzeugmaschine 11 dargestellt. Die Werkzeugmaschine 11 verfügt im Rahmen des Ausführungsbeispiels über fünf Maschinenachsen, durch die eine Relativbewegung zwischen einem Werkzeug 18, das im Rahmen des Ausführungsbeispiels in Form eines Fräsers vorliegt, und einem Werkstück 21 durchgeführt werden kann. Das Werkzeug 18 ist dabei in eine Werkzeugaufnahme 17 eingespannt, die von einem Motor 15 rotatorisch angetrieben wird. Der Motor 15 und damit das Werkzeug 18 lassen sich mit der Übersichtlichkeit halber in FIG 1 nicht dargestellten Antrieben in X-, Y- und Z-Richtung translatorisch bewegen und in Richtung α drehen. Weiterhin kann das Werkstück 21 mit Hilfe eines angetriebenen Rundtischs 25 in Richtung β gedreht werden. Der Rundtisch 25 ist dabei auf einem ruhenden Maschinengestell 19 drehbar gelagert.

Das Werkstück 21 ist durch eine Einspannvorrichtung 20 am Rundtisch 25 befestigt.

Die Werkzeugmaschine 11 weist somit fünf Maschinenachsen auf, d.h. es handelt sich um eine sogenannte 5-achsige Werkzeugmaschine.

Es sei dabei an dieser Stelle angemerkt, dass die erfindungsgemäße Werkzeugmaschine selbstverständlich auch noch mehr oder weniger als fünf Maschinenachsen aufweisen kann.

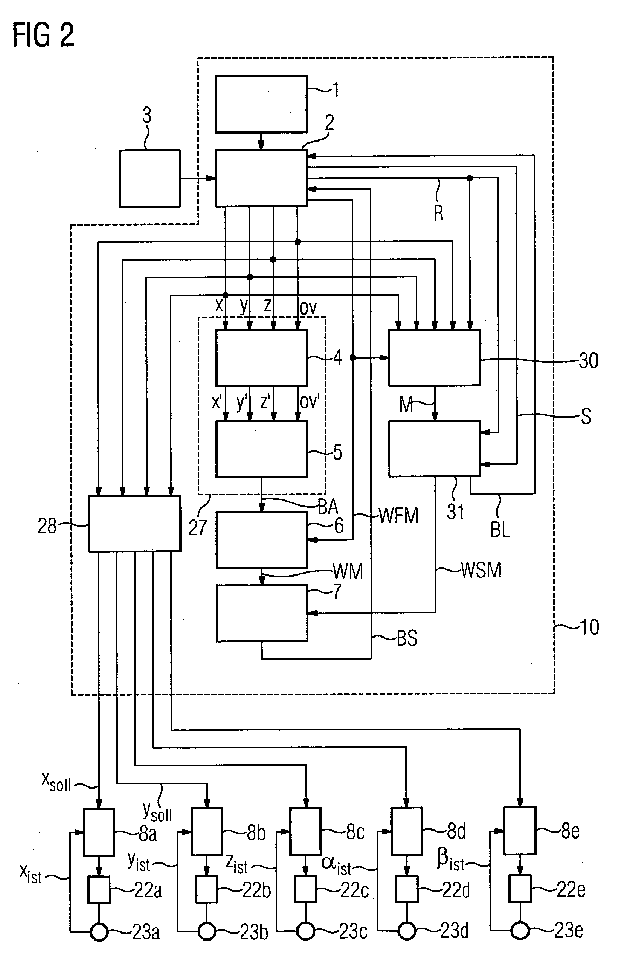

In FIG 2 sind in Form eines Blockschaltbilds eine erfindungsgemäße Einrichtung 10 zur Steuerung einer Werkzeugmaschine, d.h. im Rahmen des Ausführungsbeispiels der Werkzeugmaschine 11, sowie die Antriebe zur Bewegung des Werkzeugs und des Werkstücks dargestellt.

Die Einrichtung 10 weist eine Steuereinheit 2 auf, die anhand eines Teileprogramms 3 und/oder einer Handbedieneingabe Bewegungssollwerte x, y, z und ov zur Steuerung einer zwischen dem Werkzeug 18 und dem Werkstück 21 stattfindenden Relativbewegung, ermittelt. Die Steuereinheit 2 ermittelt die Bewegungssollwerte anhand des Teileprogramms 3, in dem die vom Werkzeug in Bezug zum Werkstück durchzuführende Bewegung in Form von Befehlen definiert ist. Zusätzlich kann die Bewegung des Werkzeugs und/oder des Werkstücks auch mittels einer Handbedieneingabe, welche über eine Bedieneinrichtung 1 eingegeben wird, von einem Bediener vor Ort an der Werkzeugmaschine vorgegeben werden. Bei der Bedieneinrichtung 1 kann es sich z.B. um ein Handrad und/oder eine Tastatur handeln.

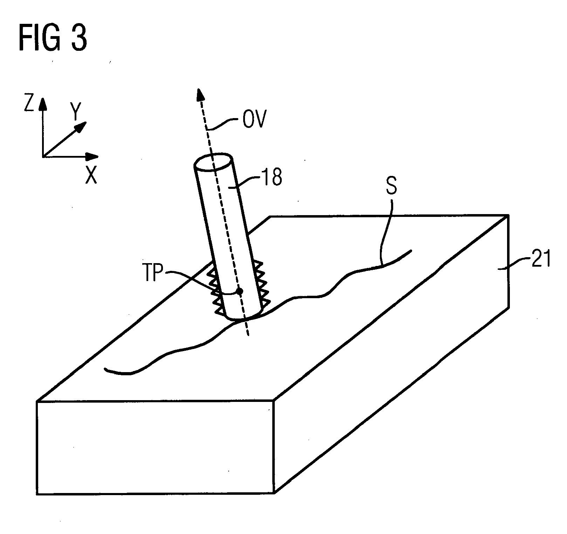

Das Teileprogramm 3 wird dabei üblicherweise von einem CAM/CAD-System und einem eventuell dem CAM/CAD-System nach geschalteten sogenannten Postprozessor erzeugt. Im Teileprogramm ist dabei die Bewegung des Werkzeugs 18 im Bezug zu einem ruhenden Werkstück 21 definiert (siehe FIG 3). Das Werkzeug 18 wird dabei längs einer Bewegungsbahn S bewegt. Die Bewegungssollwerte, welche von der Steuereinheit 2 ermittelt werden, liegen dabei im Rahmen des Ausführungsbeispiels in Form von Lagesollwerten x, y und z, die die Bewegung des so genannten Toolcenter Points TP des Werkzeugs 18 in X-, Y- und Z-Richtung, d.h. im 3-dimensionalen Raum, beschreiben. Der Toolcenter Point TP ist dabei ein vorzugsweise auf der Rotationsachse des Werkzeugs 18 definierter Punkt. Weiterhin werden von der Steuereinheit 2 als Bewegungssollwerte auch Orientierungsvektorwerte ov ermittelt, die die Orientierung des Orientierungsvektors OV des Werkzeugs und damit die Ausrichtung des Werkzeugs im 3-dimensionalen Raum angeben, wenn das Werkzeug 18 auf der Bewegungsbahn S bewegt wird.

Durch die Bewegungssollwerte ist die Lage und Orientierung des Werkzeugs im Bezug zum Werkstück auf der Bewegungsbahn S für jeden Punkt der Bewegungsbahn S definiert.

Die Ermittlung der Bewegungssollwerte zur Steuerung der zwischen Werkzeug und Werkstück stattfindenden Relativbewegung erfolgt anhand des Teileprogramms bei Start der Abarbeitung des Teileprogramms. Parallel hierzu wird die Ermittlung des Materialabtrags M am Werkstück anhand der ermittelten Bewegungssollwerte gestartet. Zur Ermittelung des Materialsabtrags M werden die Bewegungssollwerte x, y, z und ov unmittelbar nach deren Ermittlung im Interpolationstakt (z.B. alle 4 ms) an eine Materialabtragsermittlungseinheit 30 übermittelt, die anhand der Bewegungssollwerte den durch die Bearbeitung des Werkstücks durch das Werkzeug entstehende Materialabtrag M am Werkstück berechnet. Zur Ermittlung des Materialabtrags M werden weiterhin Werkstückrohteildaten R, die die geometrische Form des Rohteils (geometrische Form des Werkstücks vor der Bearbeitung durch das Werkzeug) des Werkstücks beschreiben und in einem Speicher der Einrichtung 10 hinterlegt sind von der Steuereinheit 2 an die Materialabtragsermittlungseinheit 30 übermittelt. Weiterhin wird auch ein die geometrische Form des Werkzeugs beschreibendes Werkzeugformmodell WFM, welches in einem Speicher der Einrichtung 10 gespeichert ist, von der Steuereinheit 2 an die Materialabtragsermittlungseinheit 30 übermittelt. Die Materialabtragsermittlungseinheit 30 ermittelt dann anhand des Werkzeugformmodells WFM, der Bewegungssollwerte sowie der Werkstückrohteildaten R durch die Bearbeitung des Werkzeugs am Werkstück entstehenden Materialabtrag M.

Die Ermittlung des Materialabtrags M erfolgt im Rahmen des Ausführungsbeispiels vorzugsweise in Echtzeit mit der Ermittlung der Bewegungssollwerte. Die Steuereinheit 2 erzeugt dabei die Bewegungssollwerte in der Regel vorzugsweise in einem festen Zeittakt, dem sogenannten Interpolationstakt. Werden z.B. im Rahmen des Ausführungsbeispiels alle vier Millisekunden Bewegungssollwerte von der Steuereinheit 2 erzeugt, dann wird vorzugsweise entsprechend alle vier Millisekunden der Materialabtrag M neu berechnet und aktualisiert. Selbstverständlich kann die Ermittlung des Materialabtrags M aber auch nicht in Echtzeit erfolgen.

Wenn nach einer Beendigung, d.h. nach einem vollständigen Durchlaufen des Teileprogamms, oder Unterbrechung der Abarbeitung des Teileprogramms 3 die Relativbewegung zwischen Werkstück und Werkzeug zum Stillstand gekommen ist, wird von der Werkstückmodellermittlungseinheit 31 anhand des ermittelten Materialabtrags M und der Werkstückrohteildaten R ein die geometrische Form des Werkstücks beschreibendes Werkstückmodell WSM ermittelt. Die Werkstückrohteildaten R werden von der Steuereinheit 2 an die Werkstückmodellermittlungseinheit 31 übermittelt. Eine Unterbrechung der Abarbeitung des Teileprogramms kann z.B. durch den Bediener veranlasst, z.B. durch eine Umschaltung von Automatikbetrieb auf Handbetrieb, erfolgen. Zur Ermittelung des Werkstückmodell WSM werden im Rahmen des Ausführungsbeispiels von der Werkstückmodellermittlungseinheit 31 ein Gitternetz berechnet, dass zueinander auf der Oberfläche des Werkstücks liegende benachbarte Punkte miteinander verbindet, so dass im Rahmen des Ausführungsbeispiels das Werkstückmodells WSM in Form eines sogenannten Volumenmodells, das durch das Gitternetz gebildet wird, vorliegt. Das Ermitteln des Werkstückmodells WSM anhand des Materialabtrags M und der Werkstückrohteildaten R ist sehr rechenaufwändig, so dass dieses nicht in Echtzeit, d.h. zeitlich parallel zur tatsächlich stattfindenden realen Bearbeitung an der Maschine durchgeführt werden kann.

Wenn nach einer Beendigung oder Unterbrechung der Abarbeitung des Teileprogramms 3 die Relativbewegung zwischen Werkstück und Werkzeug zum Stillstand gekommen ist, wird von der Steuereinheit 2 ein Startsignal S an die Werkstückmodellermittlungseinheit 31 übermittelt. Sobald die Werkstückmodellermittlungseinheit 31 das Startsignal S empfängt, ermittelt diese aus dem Materialabtrag M, der sich dann nicht mehr verändert, das Werkstückmodell WSM. Solange die Ermittelung des Werkstückmodells WSM durch die Werkstückmodellermittlungseinheit 31 läuft, sendet die Werkstückmodellermittlungseinheit 31 ein Blockiersignal BL für eine Handbedieneingabe an die Steuereinheit 2, bis das Werkstückmodell fertig berechnet ist. Solange das Blockierungssignal BL ansteht werden von einem Bediener der Werkzeugmaschine an der Bedieneinrichtung 1 eingegebene Handbedieneingaben, zur Steuerung einer Relativbewegung zwischen Werkzeug und Werkstück, blockiert. Da die Werkstückmodellermittlungseinheit 31 der Materialabtrag M als Eingangsgröße fertig vorliegt und anhand des Materialabtrag M von der Werkstückmodellermittlungseinheit 31 relativ schnell das Werkstückmodell WSM berechnet werden kann dauert die Blockierung der Handbedieneingabe nur eine kurze Zeit. Der Bediener kann anschließend, d.h. nach abgeschlossener Ermittelung des Werkstückmodell WSM, durch eine Handbedieneingabe an der Bedieneinrichtung 1 eine Relativbewegung zwischen Werkzeug und Werkstück vorgeben, um z.B. das Werkzeug aus dem Werkstück mittels der Maschinenachsen zu bewegen. Die Steuereinheit 2 ermittelt anhand der Handbedieneingabe die Bewegungssollwerte x, y, z und ov in analoger weise wie dies vorher durch das Teileprogramm gesteuert erfolgte. Das Werkstückmodell WSM wird an eine Überprüfungseinheit 7 übermittelt.

Die Bewegungssollwerte werden weiterhin von der Steuereinheit 2 an eine Bremsendanordungsermittlungseinheit 27 und innerhalb dieser an eine erste Berechnungseinheit 4 als Eingangsgrößen zugeführt. Die erste Berechnungseinheit 4 der Bremsendanordungsermittlungseinheit 27 ermittelt aus den aktuellen Bewegungssollwerten x, y, z und ov jeweils zu erwartende zukünftige Bewegungssollwerte x', y', z' und ov'. Die zukünftigen Bewegungswerte werden dabei im Rahmen des Ausführungsbeispiels durch Extrapolation aus den aktuell von der Steuereinheit 2 erzeugten Bewegungssollwerten und aus weiter in der Vergangenheit liegenden Bewegungssollwerten ermittelt. So kann z.B. aus den aktuellen Bewegungssollwerten und den in der Vergangenheit liegenden Bewegungssollwerten die Geschwindigkeit des Werkzeugs in jeder Richtung berechnet werden und anhand dieser Geschwindigkeit eine zu erwartende zukünftige Lage des Werkzeugs ermittelt werden. In analoger Weise kann auch die Orientierung des Orientierungsvektors des Werkzeugs in die Zukunft extrapoliert werden. Vorzugsweise werden dabei die Bewegungssollwerte nur um einen sogenannten Interpolationstakt der Steuereinheit, d.h. in der Regel nur um wenige Millisekunden in die Zukunft, voraus berechnet. Die zu erwartenden zukünftigen Bewegungssollwerte stimmen somit sehr genau mit den tatsächlichen zukünftigen Bewegungssollwerten überein, welche im nächsten Interpolationstakt von der Steuereinheit 2 erzeugt werden. Selbstverständlich können die zu erwartenden zukünftigen Bewegungssollwerte aber auch weiter in der Zukunft liegen als nur wenige Millisekunden.

Die zu erwartenden zukünftigen Bewegungssollwerte x', y', z' und ov' werden anschließend an eine zweite Berechnungseinheit 5 der Bremsendanordungsermittlungseinheit 27 übermittelt. Die zweite Berechnungseinheit 5 ermittelt anhand der zu erwartenden zukünftigen Bewegungssollwerte x', y', z' und ov' eine Bremsendanordnung BA des Werkzeugs 18. Die Bremsendanordnung BA gibt dabei die Lage und die Orientierung des Werkzeugs bei Stillstand der Relativbewegung zwischen Werkzeug und Werkstück an, wenn anhand den zu erwartenden zukünftigen Bewegungssollwerten eine Bremsung der Relativbewegung zwischen Werkzeug und Werkstück bis zum Stillstand der Relativbewegung durchgeführt werden würde. Die Bremsendanordnung BA wird anschließend an eine Werkzeugmodellermittelungseinheit 6 übermittelt, die anhand der Bremsendanordnung BA und ein die geometrische Form des Werkzeugs beschreibendes Werkzeugformmodell WMF ein Werkzeugmodell WM ermittelt. Das Werkzeugmodell WM beschreibt somit, im Rahmen des Ausführungsbeispiels, die geometrische Form des Werkzeugs, die Lage des Werkzeugs sowie die Orientierung des Werkzeugs.

Die Steuereinheit 2 übermittelt hierzu das Werkzeugformmodell WFM des Werkzeugs an die Werkzeugmodellermittelungseinheit 6. Das Werkzeugformmodell ist dabei in einem Speicher der Einrichtung 10 gespeichert. Das Werkzeugmodell WM wird anschließend an eine Überprüfungseinheit 7 übermittelt, in welcher geprüft wird, ob sich das Werkzeugmodell WM mit dem Werkstückmodell WSM überschneidet.

Wenn die Überprüfungseinheit 7 feststellt, dass sich das Werkzeugmodell WM mit dem Werkstückmodell WSM überschneidet, wird von der Überprüfungseinheit 7 ein Abbremsen der Relativbewegung zwischen Werkzeug und Werkstück bis zum Stillstand der Relativbewegung bewirkt. Die Überprüfungseinheit 7 erzeugt hierzu im Falle einer Überschneidung von Werkzeugmodell und Werkstückmodell ein Bremssignal BS und übermittelt dieses an die Steuereinheit 2, die über eine entsprechende Erzeugung von Bewegungssollwerten eine Abbremsung der Relativbewegung bis zum Stillstand der Relativbewegung bewirkt.

Zeitlich gesehen parallel zu der Übermittlung der Bewegungssollwerte von der Steuereinheit 2 an die Bremsendanordungsermittlungseinheit 27 werden die Bewegungssollwerte an eine Koordinatentransformationseinheit 28 übermittelt, die entsprechend der Kinematik der Werkzeugmaschine, d.h. der tatsächlich zur Bewegung des Werkzeugs und/oder des Werkstücks zur Verfügung stehenden Maschinenachsen der Werkzeugmaschine, Lagesollwerte xₛₒₗₗ, yₛₒₗₗ, zₛₒₗₗ, αₛₒₗₗ und βₛₒₗₗ als Regelsollwerte zur Steuerung der Bewegung der Antriebe zur Bewegung der Maschinenachsen, erzeugt. Je nach dem, wie die Kinematik der Werkzeugmaschine ausgebildet ist, wird das Werkstück und/oder das Werkzeug zur Realisierung der Relativbewegung zwischen Werkstück und Werkzeug bewegt. So wird z.B. wenn die Werkzeugmaschine eine Kinematik aufweist, bei der nur das Werkstück bewegt werden kann, während das Werkzeug ruhend angeordnet ist, das Werkstück zur Realisierung der Relativbewegung zwischen Werkstück und Werkzeug bewegt.

Die Lagesollwerte zur Steuerung der Antriebe werden an die jeweilige zugehörige Regelung 8a, 8b, 8c, 8d und 8e übermittelt, die entsprechend zugeordnete Stromrichter 22a, 22b, 22c, 22d und 22e ansteuern. Die Stromrichter versorgen einen jeweils zugeordneten Elektromotor 23a, 23b, 23c, 23d und 23e, die jeweils eine Maschinenachse antreiben. Dabei werden von Lagegebern, die der Übersichtlichkeit halber in FIG 2 nicht dargestellt sind, Lageistwerte xᵢₛₜ, yᵢₛₜ, zᵢₛₜ, αᵢₛₜ und βᵢₛₜ als Regelistwerte zur Regelung der Antriebe an die Regelungen 8a, 8b, 8c, 8d und 8e übermittelt.

Das erfindungsgemäße Verfahren zur Vermeidung einer ungewollten Kollision arbeitet somit parallel zur tatsächlich an der Maschine durchgeführten Bewegung des Werkzeugs und/oder des Werkstücks. Es ist somit kein Zeitraum nach Start der Abarbeitung des Teileprogamms mehr notwendig, in dem für eine gewisse Zeit lang eine Simulation im Voraus berechnet wird, bevor mit der eigentlichen realen Bearbeitung des Werkstücks begonnen werden kann. Die Bearbeitungszeit zur Bearbeitung des Werkstücks wird somit durch die Erfindung reduziert.

Da das Verfahren vorzugsweise nur über eine relativ kleine Zeitspanne in der Zukunft liegende zu erwartende Bewegungssollwerte ermittelt, arbeitet es hochgenau, so dass keine Sicherheitsabstände zwischen Werkstück und Werkzeug notwendig sind und somit das Verfahren auch bei der Fertigung von sehr kleinen und insbesondere filigranen Werkstücken eingesetzt werden kann.

Es sei an dieser Stelle angemerkt, dass im Rahmen des Ausführungsbeispiels die Steuereinheit 2, die Bremsanordnungsermittlungseinheit 27, die Werkzeugmodellermittlungseinheit 6, die Überprüfungseinheit 7, die Materialabtragsermittlungseinheit 30, die Werkstückmodellermittlungseinheit 31, sowie die Koordinatentransformationseinheit 28 in Form von Programmcodeabschnitten vorliegen, die auf einem oder mehreren Prozessoren ausgeführt werden.

Die einzelnen Einheiten können dabei auf einer einzelnen Recheneinheit, die über einen einzelnen oder mehrere Prozessoren verfügen kann oder aber auf mehreren voneinander getrennten Recheneinheiten, ablaufen. So kann z.B. die Steuereinheit 2, die Bremsanordnungsermittlungseinheit 27, die Werkzeugmodellermittlungseinheit 6, die Überprüfungseinheit 7 sowie die Koordinatentransformationseinheit 28 auf einer ersten Recheneinheit ablaufen und die Materialabtragsermittlungseinheit 30 und die Werkstückmodellermittlungseinheit 31 auf einer zweiten Recheneinheit, wie z.B. einem Personal Computer, ablaufen. Selbstverständlich können aber auch alle Einheiten auf einer einzigen Recheneinheit ablaufen.

## Patentansprüche

1. Verfahren zur Vermeidung einer ungewollten Kollision zwischen einem Werkzeug (18) und einem Werkstück (21) bei einer Werkzeugmaschine (11), wobei bei Start einer Abarbeitung eines Teileprogramms (3) die Ermittlung von Bewegungssollwerten (x,y,z,ov) zur Steuerung einer Relativbewegung zwischen Werkzeug (18) und Werkstück (21) anhand des Teileprogramms (3) und eine Ermittlung des Materialabtrags (M) am Werkstück (21) durch das Werkzeug (18) anhand der ermittelten Bewegungssollwerte (x,y,z,ov) gestartet wird,
**dadurch gekennzeichnet, dass** wenn nach einer Beendigung oder Unterbrechung der Abarbeitung des Teileprogramms (3) die Relativbewegung zum Stillstand gekommen ist, anhand des ermittelten Materialabtrags (M) ein Werkstückmodell (WSM) ermittelt wird, wobei anhand einer Handbedieneingabe die Bewegungssollwerte (x,y,z,ov) ermittelt werden, wobei anhand der Bewegungssollwerte (x,y,z,ov) zu erwartende zukünftige Bewegungssollwerte (x',y',z',ov') ermittelt werden, wobei anhand der zu erwartenden zukünftigen Bewegungssollwerte (x',y',z',ov') eine Bremsendanordnung (BA) des Werkzeugs (18) ermittelt wird, wobei anhand der Bremsendanordnung (BA) des Werkzeugs (18) und eines die geometrische Form des Werkzeugs (18) beschreibenden Werkzeugformmodells (WFM) ein Werkzeugmodell (WM) ermittelt wird, wobei überprüft wird, ob das Werkzeugmodell (WM) sich mit dem Werkstückmodell (WSM) überschneidet, wobei im Falle einer festgestellten Überschneidung ein Abbremsen der Relativbewegung zwischen Werkzeug (18) und Werkstück (21) bis zum Stillstand der Relativbewegung bewirkt wird.

2. Computerprogramm oder Computerprogramme mit Programmcode zur Durchführung eines Verfahrens nach Anspruch 1, wenn das Computerprogramm oder die Computerprogramme von mindestens einer Recheneinheit ausgeführt werden.

3. Einrichtung zur Steuerung einer Werkzeugmaschine (11), wobei die Einrichtung aufweist:
- eine Steuereinheit (2), die zur Ermittlung von Bewegungssollwerten (x,y,z,ov) zur Steuerung einer Relativbewegung zwischen Werkzeug (18) und Werkstück (21) anhand eines Teileprogramms (3) und zum Starten der Ermittlung eines Materialabtrags (M) am Werkstück (21) durch das Werkzeug (18) anhand der ermittelten Bewegungssollwerte (x,y,z,ov) bei Start der Abarbeitung des Teileprogramms (3) ausgebildet ist, wobei die Steuereinheit (2) weiterhin zur Ermittlung von Bewegungssollwerten (x,y,z,ov) zur Steuerung einer Relativbewegung zwischen Werkzeug (18) und Werkstück (21) anhand einer Handbedieneingabe ausgebildet ist,
- eine Materialabtragsermittlungseinheit (30), die zur Ermittlung des Materialabtrags (M) am Werkstück (21) durch das Werkzeug (18) anhand der ermittelten Bewegungssollwerte (x, y, z, ov) ausgebildet ist,
- eine Werkstückmodellermittlungseinheit (31), die zur Ermittlung eines Werkstückmodells (WSM) anhand des ermittelten Materialabtrags (M), wenn nach einer Beendigung oder Unterbrechung der Abarbeitung des Teileprogramms (3) die Relativbewegung zum Stillstand gekommen ist, ausgebildet ist,
- eine Bremsendanordnungsermittlungseinheit (27), die zur Ermittlung von zu erwartenden zukünftigen Bewegungssollwerten ((x',y',z',ov') anhand der Bewegungssollwerte (x,y,z, ov) ausgebildet ist, wobei die Bremsendanordnungsermittlungseinheit (27) ausgebildet ist, anhand der zu erwartenden zukünftigen Bewegungssollwerte (x',y',z',ov') eine Bremsendanordnung (BA) des Werkzeugs (18) zu ermitteln,
- eine Werkzeugmodellermittelungseinheit, die zur Ermittlung eines Werkzeugmodells (WM) anhand der Bremsendanordnung (BA) und einem die geometrische Form des Werkzeugs (18) beschreibenden Werkzeugformmodells (WFM) ausgebildet ist und
- eine Überprüfungseinheit (7), die zur Überprüfung, ob das Werkzeugmodell (WM) sich mit dem Werkstückmodell (WSM) überschneidet, ausgebildet ist, wobei die Überprüfungseinheit (7) ausgebildet ist, im Falle einer festgestellten Überschneidung eine Abbremsung der Relativbewegung zwischen Werkzeug (18) und Werkstück (21) bis zum Stillstand der Relativbewegung zu bewirken.

4. Werkzeugmaschine (11), wobei die Werkzeugmaschine (11) eine Einrichtung nach Anspruch 3 aufweist.

## Claims

1. Method for avoiding an unwanted collision between a tool (18) and a workpiece (21) in a machine tool (11), wherein when a part program (3) starts to run, the determination of setpoint movement values (x,y,z,ov) for controlling a relative movement between tool (18) and workpiece (21) is started based on the part program (3) and a determination of the material removal (M) at the workpiece (21) by the tool (18) is started based on the determined setpoint movement values (x,y,z,ov),
**characterised in that** if, after a termination or interruption of the running of the part program (3), the relative movement has stopped, a workpiece model (WSM) is determined based on the determined material removal (M), wherein the setpoint movement values (x,y,z,ov) are determined based on a manual operating input, wherein expected future setpoint movement values (x',y',z',ov') are determined based on the setpoint movement values (x,y,z,ov), wherein a braking end arrangement (BA) of the tool (18) is determined based on the expected future setpoint movement values (x',y',z',ov'), wherein a tool model (WM) is determined based on the braking end arrangement (BA) of the tool (18) and a tool form model (WFM) describing the geometric form of the tool (18), wherein it is checked whether the tool model (WM) overlaps with the workpiece model (WSM), wherein if an overlap is detected, a slowing down of the relative movement between tool (18) and workpiece (21) is brought about until the relative movement stops.

2. Computer program or computer programs with program code for performing a method according to claim 1, when the computer program or computer programs are executed by at least one computation unit.

3. Facility for controlling a machine tool (11), wherein the facility has:
- a control unit (2), which is configured to determine setpoint movement values (x,y,z,ov) for controlling a relative movement between tool (18) and workpiece (21) based on a part program (3) and to start the determination of a material removal (M) at the workpiece (21) by the tool (18) based on the determined setpoint movement values (x,y,z,ov) when the part program (3) starts to run, wherein the control unit (2) is also configured to determine setpoint movement values (x,y,z,ov) for controlling a relative movement between tool (18) and workpiece (21) based on a manual operating input,
- a material removal determination unit (30), which is configured to determine material removal (M) at the workpiece (21) by the tool (18) based on the determined setpoint movement values (x,y,z,ov),
- a workpiece model determination unit (31), which is configured to determine a workpiece model (WSM) based on the determined material removal (M), if, after a termination or interruption of the running of the part program (3), the relative movement has stopped,
- a braking end arrangement determination unit (27), which is configured to determine expected future setpoint movement values (x',y',z',ov') based on the setpoint movement values (x,y,z, ov), wherein the braking end arrangement determination unit (27) is configured to determine a braking end arrangement (BA) of the tool (18) based on the expected future setpoint movement values (x',y',z',ov'),
- a tool model determination unit, which is configured to determine a tool model (WM) based on the braking end arrangement (BA) and a tool form model (WFM) describing the geometric form of the tool (18) and
- a check unit (7), which is configured to check whether the tool model (WM) overlaps with the workpiece model (WSM), wherein the check unit (7) is configured to bring about a slowing down of the relative movement between tool (18) and workpiece (21) until the relative movement stops, if an overlap is detected.

4. Machine tool (11), wherein the machine tool (11) has a facility according to claim 3.

## Revendications

1. Procédé pour empêcher une collision involontaire entre un outil ( 18 ) et une pièce ( 21 ) dans une machine-outil ( 11 ), dans lequel, au début du déroulement d'un sous-programme ( 3 ), on fait débuter la détermination de valeurs ( x, y, z, ov ) de consigne de déplacement pour la commande d'un mouvement relatif entre l'outil ( 18 ) et la pièce ( 21 ), au moyen du sous-programme ( 3 ) et une détermination de l'enlèvement ( M ) de matière de la pièce ( 21 ) par l'outil ( 18 ), au moyen des valeurs ( x, y, z, ov ) de consigne de déplacement déterminées,
**caractérisé en ce que**, si après un achèvement ou une interruption du déroulement du sous-programme ( 3 ), le mouvement relatif est arrivé à l'arrêt, on détermine un modèle ( WSM ) de pièce, au moyen de l'enlèvement ( M ) de matière déterminée, les valeurs ( x, y, z, ov ) de consigne de déplacement étant déterminées au moyen d'une entrée à commande manuelle, des valeurs ( x', y', z', ov' ) de consigne de déplacement à venir escomptées étant déterminées au moyen des valeurs ( x, y, z, ov ) de consigne de déplacement, un agencement ( BA ) de fin de freinage de l'outil ( 18 ) étant déterminé au moyen des valeurs ( x', y', z', ov' ) de consigne de déplacement à venir escomptées, un modèle ( WM ) d'outil étant déterminé au moyen de l'agencement ( BA ) de fin de freinage de l'outil ( 18 ) et d'un modèle ( WFM ) de forme d'outil décrivant la forme géométrique de l'outil ( 18 ), dans lequel on contrôle si le modèle ( WM ) d'outil se recoupe avec le modèle ( WSM ) de pièce, dans lequel, dans le cas de la constatation d'un recoupement, on provoque un freinage du mouvement relatif entre l'outil ( 18 ) et la pièce ( 21 ) jusqu'à l'arrêt du mouvement relatif.

2. Programme d'ordinateur ou programmes d'ordinateur ayant un code de programme pour effectuer un procédé suivant la revendication 1, lorsque le programme d'ordinateur ou lorsque les programmes d'ordinateur est ( sont ) exécuté ( s ) par au moins une unité de calcul.

3. Dispositif de commande d'une machine-outil ( 11 ), dans lequel le dispositif a :
- une unité ( 2 ) de commande, qui est constituée pour la détermination de valeurs ( x, y, z, ov ) de consigne de déplacement pour se rendre maître du déplacement relatif entre un outil ( 18 ) et une pièce ( 21 ), au moyen d'un sous-programme ( 3 ) et pour faire débuter la détermination d'un enlèvement ( M ) de matière de la pièce ( 21 ) par l'outil ( 18 ), au moyen des valeurs ( x, y, z, ov ) de consigne de déplacement déterminées au début du déroulement du sous-programme ( 3 ), dans lequel l'unité ( 2 ) de commande est constituée en outre pour la détermination de valeurs ( x, y, z, ov ) de consigne de déplacement pour se rendre maître d'un mouvement relatif entre l'outil ( 18 ) et la pièce ( 12 ) au moyen d'une entrée à commande manuelle,
- une unité ( 30 ) de détermination de l'enlèvement de matière, qui est constituée pour la détermination de l'enlèvement ( M ) de matière de la pièce ( 21 ) par l'outil ( 18 ), au moyen des valeurs ( x, y, z, ov ) de consigne de déplacement déterminées,
- une unité ( 31 ) de détermination d'un modèle de pièce, qui est constituée pour la détermination d'un modèle ( WSM ) de pièce au moyen de l'enlèvement ( M ) de matière déterminée, si, après un achèvement ou une interruption du déroulement du sous-programme ( 3 ), le mouvement relatif est arrivé à l'arrêt,
- une unité ( 27 ) de détermination d'un agencement de fin de freinage, qui est constituée pour la détermination de valeurs ( x', y', z', ov' ) de consigne de déplacement à venir escomptées, au moyen des valeurs ( x, y, z, ov ) de déplacement, l'unité ( 27 ) de détermination d'un agencement de fin de freinage étant constituée pour déterminer, au moyen des valeurs ( x', y', z', ov' ) de consigne de déplacement à venir escomptées, un agencement ( BA ) de fin de freinage de l'outil ( 18 ),
- une unité de détermination d'un modèle d'outil, qui est constituée pour la détermination d'un modèle ( WM ) d'outil, au moyen de l'agencement ( BA ) de fin de freinage et d'un modèle ( WFM ) de forme d'outil décrivant la forme géométrique de l'outil ( 18 ) et
- une unité ( 7 ) de contrôle, qui est constituée pour contrôler si le modèle ( WM ) d'outil se recoupe avec le modèle ( WSM ) de pièce, l'unité ( 7 ) de contrôle étant constituée pour, dans le cas de la constatation d'un recoupement, provoquer un freinage du mouvement relatif entre l'outil ( 18 ) et la pièce ( 21 ) jusqu'à l'arrêt du mouvement relatif.

4. Machine-outil ( 11 ), dans laquelle la machine-outil ( 11 ) a un dispositif suivant la revendication 3.
